# EUROPEAN PATENT SPECIFICATION

(11) **EP 4 485 655 B1**
(45) Date of publication and mention of the grant of the patent: **06.05.2026**
(21) Application number: 22963762.4
(22) Date of filing: 31.10.2022
(51) Int. Cl.: H01M 50/264, H01M 50/249, H01M 50/317, H01M 50/375, H01M 50/244, H01M 50/209

(54) **BATTERY AND ELECTRIC DEVICE**
BATTERIE UND ELEKTRISCHE VORRICHTUNG
BATTERIE ET DISPOSITIF ÉLECTRIQUE

(43) Date of publication of application: 01.01.2025
(73) Proprietor: Contemporary Amperex Technology (Hong Kong) Limited, Hong Kong (HK)
(72) Inventor: WU, Shaoji, Ningde, Fujian 352100 (CN); LI, Yao, Ningde, Fujian 352100 (CN); CHEN, Xiaobo, Ningde, Fujian 352100 (CN); CHEN, Shilong, Ningde, Fujian 352100 (CN); GU, Mingguang, Ningde, Fujian 352100 (CN)
(74) Representative: Ziebig Hengelhaupt Intellectual Property Attorneys Patentanwaltskanzlei PartGmbB
(86) International application number: PCT/CN2022/128744
(87) International publication number: WO 2024/092442

(56) References cited:
- CN-U- 216 529 223
- CN-U- 216 529 223
- DE-A1- 102022 211 202
- JP-A- 2006 260 905
- US-A1- 2019 229 384
- US-A1- 2022 320 651
- US-A1- 2022 320 673
- US-A1- 2022 320 696

## Description

### Technical Field

The present application relates to the technical field of batteries, and more particularly to a battery and an electrical device.

### Background

With the development over time, electric vehicles, with their advantages such as high environment friendliness, low noise, and low use costs, have great market prospects and can effectively promote energy conservation and emission reduction, and therefore are conducive to the development and progress of society. For electric vehicles, battery technology is an important factor related to their development.

In the development of the battery technology, safety is also a non-negligible issue in addition to the improvement of performance of batteries. If the safety of the batteries cannot be guaranteed, the batteries cannot be used. Therefore, how to improve the safety of the batteries is an urgent problem to be solved in the battery technology. US2022/320696 A1 discloses a battery according to the preamble of claim 1.

### Summary of the Invention

The present application provides a battery and an electrical device and can improve safety performance of the battery.

In a first aspect, provided is a battery according to claim 1.

The reinforcing structure is disposed on the surface of the first support wall so that the first support wall provides greater support to support the battery cell. In addition, the reinforcing structure is disposed on the surface of the first support wall away from the first wall so that the reinforcing structure can avoid affecting connection between the first support wall and the first wall.

The two side walls of the support component may improve the overall impact resistance of the support component. Especially when the box is subjected to mechanical extrusion or impact from the side, the two side walls may provide sufficient structural strength to resist the extrusion and impact from the side, thereby avoiding vibration of the battery cell inside the box and ensuring the safety of the battery.

In a possible embodiment, the reinforcing structure is connected to the two side walls. The reinforcing structure is connected to the two side walls so that the overall structural strength of the support component is further increased.

In a possible embodiment, the first support wall and the two side walls form an inverted "U"-shaped structure.

The inverted "U" shaped structure may increase the structural strength of the support component as compared with a flat-plate structure while facilitating the connection between the first support wall and the first wall.

In a possible embodiment, the support component further includes a second support wall disposed opposite the first support wall, and the first support wall, the second support wall and the two side walls form a "square" structure.

The support component is provided with the second support wall opposite to the first support wall, and the formed support component that is of the "square" structure has higher structural strength. The weight of the support component is minimized while the structural strength is increased.

**In** a possible embodiment, the reinforcing structure is connected to the first support wall and/or the second support wall, further increasing the overall structural strength of the support component.

**In** a possible embodiment, the first support wall is provided with a pressure relief region, and emissions of the battery cell pass through the pressure relief region to be discharged out of the electrical chamber when the pressure relief mechanism is actuated.

The emissions of the battery cell may pass through the pressure relief region to be discharged out of the electrical chamber, avoiding that the emissions intensively enter the electrical chamber to cause short circuits or thermal runaway between battery cells to affect the safety of the battery.

**In** a possible embodiment, the pressure relief region is staggered with the reinforcing structure. **In** this way, a discharge path in which the emissions of the battery cell pass through the pressure relief region to be discharged out of the electrical chamber is blocked by the reinforcing structure, thereby ensuring that the emissions of the battery cell are discharged out of the electrical chamber smoothly, avoiding thermal runaway spread, and improving the safety of the battery.

**In** a possible embodiment, the pressure relief region is a weakened region of the first support wall, and the weakened region is to be disrupted when the pressure relief mechanism is actuated.

The pressure relief region is constructed as the weakened region, so that when the pressure relief mechanism is not actuated, for example, during normal use of the battery, the first support wall is sealed, effectively protecting the pressure relief mechanism and avoiding failure of the pressure relief mechanism due to damage by an external force. Furthermore, when the pressure relief mechanism is actuated, the weakened region can be disrupted so that the emissions of the battery cell pass through the weakened region to be discharged out of the electrical chamber, avoiding thermal runaway spread and improving the safety of the battery.

**In** a possible embodiment, the first support wall is provided with a recess corresponding to the pressure relief mechanism, and the weakened region is provided on a bottom wall of the recess.

**In** a possible embodiment, the pressure relief region is a first through hole that penetrates the first support wall along a thickness direction of the first support wall.

**In** the case that the first through hole serves as the pressure relief region, on the one hand, machining is facilitated, and on the other hand, the emissions discharged via the pressure relief mechanism may be released quickly.

In a possible embodiment, the battery further includes a sealing component, the sealing component being configured to seal the first through hole and to be disrupted when the pressure relief mechanism is actuated.

In the case that the first through hole serves as the pressure relief region, by reasonably setting the melting point of the sealing component, on the one hand, the sealing of the electrical chamber may be maintained in the normal use of the battery cell to protect the pressure relief mechanism from being affected by the external environment; and on the other hand, when thermal runaway of the battery cell occurs, the sealing component can be disrupted in time to reveal the first through hole, and then the emissions of the battery cell are discharged out of the electrical chamber through the first through hole, thereby avoiding thermal runaway spread and improving the safety of the battery.

In a possible embodiment, the sealing component is disposed in the first through hole to seal the first through hole.

The sealing component is disposed in the first through hole, without occupying other space in the box, thereby improving space utilization of the box.

In a possible embodiment, the sealing component is disposed on a surface of the first support wall facing the first wall, and/or the sealing component is disposed on a surface of the first support wall away from the first wall.

When the sealing structure is disposed on the surface of the first support wall facing the first wall, the sealing component is closer to the pressure relief mechanism and can be quickly disrupted by the emissions from the pressure relief mechanism, thereby avoiding affecting the actuation of the pressure relief mechanism while allowing the emissions to be discharged in time. When the sealing component is disposed on the surface of the first support wall away from the first wall, the distance between the pressure relief mechanism and the sealing component can provide a deformation space for the actuation of the pressure relief mechanism, thereby avoiding affecting the normal actuation of the pressure relief mechanism.

In one possible embodiment, the support component is integrally formed with the reinforcing structure, thereby saving machining time and improving machining efficiency. The integrally formed structure allows for a greater structural strength of the support component.

In a possible embodiment, the box further includes a collection chamber used for collecting the emissions of the battery cell that pass through the support component to be discharged when the pressure relief mechanism is actuated.

The collection chamber may collect and/or handle the emissions intensively and then discharge the emissions to the outside of the battery. For example, the collection chamber may contain liquid, such as a cooling medium, or be provided with a component for containing the liquid, to further cool the emissions that enter the collection chamber.

In a possible embodiment, the battery further includes an exhaust component, and the emissions of the battery cell in the collection chamber are discharged out of the box via the exhaust component.

The emissions of the battery cell may be discharged out of the box in time via the exhaust component, avoiding thermal runaway spread of the battery.

In a possible embodiment, the support component is provided with a second through hole, the box is provided with a third through hole, a first end of the exhaust component is connected to the second through hole, and a second end of the exhaust component is connected to the third through hole.

The exhaust component is connected to the second through hole of the support component and the third through hole of the box to discharge the emissions of the battery cell in the collection chamber to the outside of the box.

In a possible embodiment, the exhaust component includes a cavity that communicates with the collection chamber, and the emissions of the battery cell in the collection chamber are discharged out of the box through the cavity.

The cavity communicates with the collection chamber so that the emissions of the battery cell in the collection chamber are discharged out of the box through the cavity.

In a second aspect, provided is an electrical device, including the battery in any one of the first aspect or the possible embodiments of the first aspect, the battery being configured to supply electric energy.

In the technical solutions of the embodiment of the present application, the box of the battery includes the electrical chamber for accommodating the battery cell, the pressure relief mechanism is disposed on the first wall of the battery cell, the battery further includes the support component attached to the first wall of the battery cell, and the emissions of the battery cell can pass through the support component to be discharged out of the electrical chamber when the pressure relief mechanism is actuated, thereby avoiding thermal runaway spread of the battery and improving the safety of the battery. Moreover, the support component is provided with the reinforcing structure to improve its structural strength. In this way, the support component can better provide support for the battery cell, and when the battery is subject to an external impact, the support component has stronger impact-resistant structural strength to avoid vibration of the battery cell in the box, thereby ensuring the structural stability of the battery and further improving the safety of the battery. That is to say, the technical solutions of the present application not only prevent the thermal runaway spread of the battery, but also ensure the structural stability of the battery and greatly enhance the safety of the battery.

### Description of Drawings

In order to illustrate the technical solutions of the embodiments of the present application more clearly, the following briefly introduces the drawings required in the embodiments of the present application. Apparently, the drawings described below are only some embodiments of the present application. For those of ordinary skill in the art, other drawings can also be obtained according to the drawings without any creative effort.
FIG. 1 is a schematic structural diagram of a vehicle disclosed in an embodiment of the present application;
FIG. 2 is a schematic structural diagram of a battery disclosed in an embodiment of the present application;
FIG. 3 is a schematic structural diagram of a support component and a reinforcing structure disclosed in an embodiment of the present application;
FIG. 4 is a schematic structural diagram of a battery disclosed in an embodiment of the present application;
FIG. 5 is a schematic structural diagram of a support component and a reinforcing structure disclosed in an embodiment of the present application;
FIG. 6 is a sectional view of the support component and the reinforcing structure in FIG. 5;
FIG. 7 is a schematic structural diagram of a battery disclosed in an embodiment of the present application;
FIG. 8 is a schematic structural diagram of a battery disclosed in an embodiment of the present application;
FIG. 9 is a schematic structural diagram of a battery disclosed in an embodiment of the present application;
FIG. 10 is a schematic structural diagram of a battery disclosed in an embodiment of the present application;
FIG. 11 is a schematic structural diagram of a battery disclosed in an embodiment of the present application; and
FIG. 12 is a schematic structural diagram of a battery disclosed in an embodiment of the present application.

In the drawings, the drawings are not drawn to actual scale.

### Detailed Description

The following further describes the implementations of the present invention in detail with reference to the accompanying drawings and embodiments. The following detailed description of embodiments and the accompanying drawings are used to illustrate the principle of the present invention by way of example, rather than to limit the scope of the present application, that is, the present invention is not limited to the embodiments described herein.

In the description of the present invention it should be noted that, unless otherwise stated, "a plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of the present application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. For those of ordinary skill in the art, the specific meanings of the above terms in the present application may be understood according to specific circumstances.

In the present invention, the term "and/or" is only an association relationship for describing associated objects, indicating that there may be three relationships, for example, A and/or B may represent three situations: A exists alone, both A and B exist, and B exists alone. In addition, the character "/" in the present invention generally means that the associated objects before and after it are in an "or" relationship.

Unless otherwise defined, all technical and scientific terms used in the present invention shall have the same meanings as commonly understood by those skilled in the art to which the present application relates. The terms used in the specification of the present application are intended to merely describe the specific embodiments rather than to limit the present invention. The terms "include", "comprise", and any variations thereof in the specification and claims of the present application as well as the foregoing description of drawings are intended to cover non-exclusive inclusions. In the specification, claims, or accompanying drawings of the present invention, the terms "first", "second", and the like are intended to distinguish between different objects rather than to indicate a particular order or relative importance.

Reference to "embodiment" in the present invention means that specific features, structures, or characteristics described with reference to the embodiment may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the embodiments of the present invention, a battery cell may include a lithium-ion battery, a lithium-sulfur battery, a sodium/lithium-ion battery, a sodium-ion battery or a magnesium-ion battery, etc., which is not limited in the embodiments of the present application. The battery cell may be cylindrical, flat, rectangular, or in other shapes, which is also not limited in the embodiments of the present application. Battery cells are typically divided into three types by packaging methods: cylindrical cells, prismatic cells, and pouch cells, which are also not limited in the embodiments of the present invention.

The battery mentioned in the embodiments of the present invention refers to a single physical module comprising one or more battery units to provide a higher voltage and capacity. For example, the battery mentioned in the present application may include a battery module, a battery pack, etc. The battery generally includes a box for enclosing one or more battery cells. The box can prevent liquids or other foreign matters from affecting charging or discharging of the battery cells.

The battery cell may include an electrode assembly and an electrolyte solution. The electrode assembly is composed of a positive electrode plate, a negative electrode plate and a separator. The battery cell works mainly relying on the movement of metal ions between the positive electrode plate and the negative electrode plate. The positive electrode plate includes a positive electrode current collector and a positive electrode active material layer. The positive electrode active material layer is coated on a surface of the positive electrode current collector. A current collector not coated with the positive electrode active material layer protrudes from a current collector coated with the positive electrode active material layer. The current collector not coated with the positive electrode active material layer serves as a positive electrode tab. Taking a lithium-ion battery as an example, the material of the positive current collector may be aluminum, and the positive active material may be lithium cobalt oxide, lithium iron phosphate, ternary lithium, lithium manganate, or the like. The negative electrode plate includes a negative electrode current collector and a negative electrode active material layer. The negative electrode active material layer is coated on a surface of the negative electrode current collector. A current collector not coated with the negative electrode active material layer protrudes from the current collector coated with the negative electrode active material layer, and the current collector not coated with the negative electrode active material layer serves as a negative electrode tab. The material of the negative electrode current collector may be copper, and the negative electrode active material may be graphite, carbon, silicon, or the like. In order to ensure that no fusing occurs when a large current passes, there are a plurality of positive electrode tabs which are stacked together, and there are a plurality of negative electrode tabs which are stacked together. The separator may be made of polypropylene (PP), polyethylene (PE), or the like. In addition, the electrode assembly may be of a wound structure or a laminated structure, which is not limited in the embodiments of the present application.

Many design factors, such as energy density, cycle life, discharge capacity, charge-discharge rate and other performance parameters, should be considered in the development of the battery technology. In addition, the safety of the battery also needs to be taken into account.

For batteries, safety hazards mainly originate in charging and discharging. Therefore, in order to improve the safety performance of batteries, a pressure relief mechanism is provided for battery cells. The pressure relief mechanism refers to an element or component that is actuated to relieve the internal pressure or temperature when the internal pressure or temperature of the battery cell reaches a predetermined threshold. The predetermined threshold may be adjusted according to different design requirements. The predetermined threshold may depend on the material of one or a plurality of the positive electrode plate, the negative electrode plate, the electrolyte solution, and the separator in the battery cell. The pressure relief mechanism may employ an element or part sensitive to pressure or temperature such that the pressure relief mechanism is actuated when the internal pressure or temperature of the battery cell reaches the predetermined threshold, thereby forming a channel for relieving the internal pressure or temperature. When the pressure relief mechanism is actuated, high-pressure and high-temperature substances inside the battery cell are discharged from the pressure relief mechanism as emissions. In this way, the pressure of the battery cell can be relieved under controllable pressure or temperature, so as to avoid potential more serious accidents.

In the current design scheme of the pressure relief mechanism, the main focus is on the discharge path of the emissions inside the battery cell and the cooling treatment of the emissions. For example, the pressure relief mechanism is disposed opposite a thermal management component, and the thermal management component divides an interior of the box of the battery into an electrical chamber for accommodating battery cells and a collection chamber for collecting the emissions, and when the pressure relief mechanism is actuated, the thermal management component is partially disrupted and fluid flows out to cool a plurality of battery cells. The thermal management component is essentially hollow inside and has a low structural strength due to the need to contain fluid. Although the thermal management component provides fluid to cool the battery cells to avoid thermal runaway of the battery, due to its low structural strength, the thermal management component cannot provide sufficient support for the battery cells. When the battery is impacted, the battery cells inside the box are prone to vibration, which affects the structural stability of the battery and reduces the safety of the battery.

In view of this, the present invention provides a battery. A box of the battery includes an electrical chamber for accommodating a battery cell, a pressure relief mechanism is disposed on a first wall of the battery cell, the battery further includes a support component attached to the first wall of the battery cell, and emissions of the battery cell can pass through the support component to be discharged out of the electrical chamber when the pressure relief mechanism is actuated, thereby avoiding thermal runaway spread of the battery and improving the safety of the battery. Moreover, the support component is provided with the reinforcing structure to improve its structural strength. In this way, the support component can better provide support for the battery cell, and when the battery is subject to an external impact, the support component has stronger impact-resistant structural strength to avoid vibration of the battery cell in the box, thereby ensuring the structural stability of the battery and further improving the safety of the battery. That is to say, the technical solutions of the present application not only prevent the thermal runaway spread of the battery, but also ensure the structural stability of the battery and greatly enhance the safety of the battery.

The technical solutions described in the embodiments of the present invention are all applicable to various apparatuses using batteries, such as mobile phones, portable apparatuses, laptops, battery vehicles, electric toys, electric tools, electric vehicles, ships, spacecrafts, and the like. For example, the spacecrafts include airplanes, rockets, space shuttles, spaceships, etc.

It should be understood that the technical solutions described in the embodiments of the present invention are not only applicable to the devices described above, but also applicable to all apparatuses using batteries. However, for the sake of brevity, the following embodiments are described by taking an electric vehicle as an example.

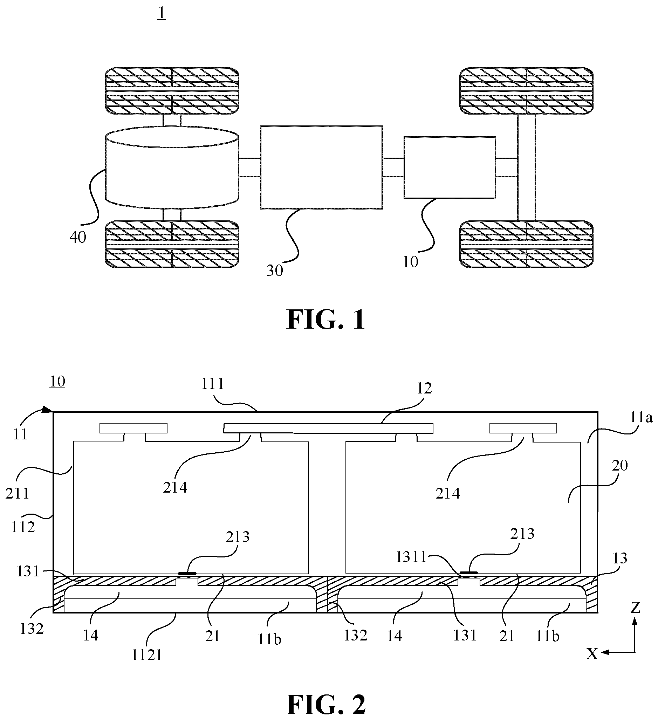

For example, as shown in FIG.1, a schematic structural diagram of a vehicle 1 according to an embodiment of the present invention is shown. The vehicle 1 may be a fuel vehicle, a gas vehicle, or a new energy vehicle, and the new energy vehicle may be an all-electric vehicle, a hybrid electric vehicle, an extended range electric vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as the operating power source of the vehicle 1, but also as the driving power source of the vehicle 1 in place of or partially in place of fuel or natural gas to provide driving power for the vehicle 1.

In order to meet different power requirements, the battery may include a plurality of battery cells, and the plurality of battery cells may be in series connection, in parallel connection, or in parallel-series connection, where the parallel-series connection refers to a combination of the series connection and the parallel connection. The battery may also be called a battery pack. For example, a plurality of battery cells may be in series, parallel or series-parallel connection to form a battery module first, and then a plurality of battery modules may be in series, parallel or series-parallel connection to form a battery. That is to say, the plurality of battery cells may directly form a battery, or may form a battery module first, and then the battery modules form a battery.

FIG. 2 is a schematic structural diagram of a battery 10 according to an embodiment of the present invention. As shown in FIG. 2, the battery 10 includes: a box 11, and the box 11 includes an electrical chamber 11a; a battery cell 20 accommodated in the electrical chamber 11a, a pressure relief mechanism 213 being disposed on a first wall 21 of the battery cell 20; and a support component 13 attached to the first wall 21, the support component 13 being configured so that emissions of the battery cell 20 pass through the support component 13 to be discharged out of the electrical chamber 11a when the pressure relief mechanism 213 is actuated, and the support component 13 being provided with a reinforcing structure 14.

The reinforcing structure 14 is a structural component that can increase the structural strength of the support component 13, and may be connected to the support component 13 to provide support for the support component 13 to prevent the support component 13 from being deformed. For example, the reinforcing structure 14 may be a reinforcing bar, a reinforcing plate, etc., and the material of the reinforcing structure 14 may be the same as, or different from, the material of the support component 13. For example, the material of the reinforcing structure 14 is steel, aluminum, mica, ceramic, composite material, etc.

It should be understood that the pressure relief mechanism 213 of the embodiment of the present invention refers to an element or component that is actuated to relieve the internal pressure or temperature when the internal pressure or temperature of the battery cell 20 reaches a predetermined threshold. The design of the threshold varies according to different design requirements. The threshold may depend on the material of one or a plurality of the positive electrode plate, the negative electrode plate, the electrolyte solution, and the separator in the battery cell 20.

The "actuate" mentioned in the present invention means that the pressure relief mechanism 213 performs an action or is activated to a certain state, so that the internal pressure and temperature of battery cell 20 can be relieved. The action performed by the pressure relief mechanism 213 may include but is not limited to, for example, cracking, breaking, tearing, or opening of at least part of the pressure relief mechanism 213. When the pressure relief mechanism 213 is actuated, high-temperature and high-pressure substances inside the battery cell 20 are discharged as emissions from an actuated portion. In this way, the pressure and temperature of the battery cell 20 can be relieved under controllable pressure or temperature, so as to prevent potential more serious accidents.

The emissions from the battery cell 20 mentioned in the present invention include, but are not limited to, the electrolyte solution, dissolved or split positive and negative electrode plates, fragments of the separator, high temperature and high pressure gas generated by reaction, flames, and the like.

The pressure relief mechanism 213 of the embodiment of the present invention is disposed on the first wall 21 of the battery cell 20, and the pressure relief mechanism 213 may be a part of the first wall 21, or may be of a split structure with the first wall 21, and is fixed to the first wall 21 by, for example, welding. For example, in the case that the pressure relief mechanism 213 is a part of the first wall 21, for example, the pressure relief mechanism 213 may be formed by providing indentation on the first wall 21. Thickness of the first wall 21 corresponding to the indentation is less than thickness of another region other than the indentation in the pressure relief mechanism 213. The indentation is the weakest position of the pressure relief mechanism 213. When the gas generated by the battery cell 20 is too much such that the internal pressure of a housing 211 of the battery cell 20 rises and reaches a threshold or the internal temperature of the battery cell 20 rises and reaches the threshold due to the heat generated by the reaction inside the battery cell 20, the pressure relief mechanism 213 may be disrupted at the indentation and cause communication between the inside and outside of the housing 211, and the gas pressure and temperature are relieved to the outside through the disrupted pressure relief mechanism 213, thus preventing the battery cell 20 from exploding.

For another example, the pressure relief mechanism 213 may also be a split structure with the first wall 21. The pressure relief mechanism 213 may take the form of an explosion-proof valve, a gas valve, a pressure relief valve or a safety valve, etc., and may specifically adopt a pressure-sensitive or temperature-sensitive element or structure. That is, when the internal pressure or temperature of the battery cell 20 reaches a predetermined threshold, the pressure relief mechanism 213 performs an action or a weakened structure provided in the pressure relief mechanism 213 is destroyed, so as to form an opening or channel for relief of the internal pressure or temperature.

It should be understood that, as shown in FIG. 2, the electrical chamber 11a of the embodiment of the present invention is used for accommodating the battery cell 20, that is, the electrical chamber 11a provides an installation space for the battery cell 20. The electrical chamber 11a may be sealed or unsealed. The shape of the electrical chamber 11a may be determined according to one or more battery cells 20 and a busbar 12 that are to be accommodated. For example, FIG. 2 is illustrated with the electrical chamber 11a being a cuboid, but the embodiment of the present invention is not limited thereto.

The embodiment of the present invention provides a battery 10. A box 11 of the battery 10 includes the electrical chamber 11a for accommodating the battery cell 20, the pressure relief mechanism 213 is disposed on the first wall 21 of the battery cell 20, the battery 10 further includes the support component 13 attached to the first wall 21 of the battery cell 20, and the emissions of the battery cell 20 can pass through the support component 13 to be discharged out of the electrical chamber 11a when the pressure relief mechanism 213 is actuated, thereby avoiding thermal runaway spread of the battery 10 and improving the safety of the battery 10. Moreover, the support component 13 is provided with the reinforcing structure 14, so that structural strength of the support component 13 is increased. In this way, the support component 13 can better provide support for the battery cell 20, and when the battery 10 is subject to an external impact, the support component 13 has stronger impact-resistant structural strength to avoid vibration of the battery cell 20 in the box 11, thereby ensuring the structural stability of the battery 10 and further improving the safety of the battery 10. That is to say, the technical solutions of the present invention not only prevent the thermal runaway spread of the battery 10, but also ensure the structural stability of the battery 10 and greatly enhance the safety of the battery 10.

It should be understood that, as shown in FIG. 2, the electrical chamber 11a of the embodiment of the present invention may also be used for accommodating the busbar 12, that is, the electrical chamber 11a provides an installation space for the battery cell 20 and the busbar 12. The busbar 12 is used to implement electrical connection between a plurality of battery cells 20, for example, in parallel, in series, or in series-parallel connection. The busbar 12 may implement electrical connection between the battery cells 20 by connecting electrode terminals 214 of the battery cells 20. In some embodiments, the busbar 12 may be fixed to the electrode terminals 214 of the battery cells 20 by welding.

One battery cell 20 may include two electrode terminals 214, and the two electrode terminals 214 are a positive electrode terminal and a negative electrode terminal, respectively. The electrode terminals 214 of the embodiment of the present invention are used to be electrically connected to tabs of an electrode assembly inside the battery cell 20 to output electric energy. The two electrode terminals 214 of the embodiment of the present application may be disposed on the same wall or on different walls of the battery cell 20.

Optionally, as shown in FIG. 2, the box 11 of the embodiment of the present invention further includes a collection chamber 11b used for collecting the emissions of the battery cell 20 that pass through the support component 13 to be discharged when the pressure relief mechanism 213 is actuated. The collection chamber 11b is used for collecting the emissions, and may be sealed or unsealed. In some embodiments, the collection chamber 11b may contain air or other gases. Optionally, the collection chamber 11b may also contain liquid, such as a cooling medium, or be provided with a component for accommodating the liquid, to further cool the emissions that enter the collection chamber 11b. Further optionally, the gas or liquid in the collection chamber 11b is circulated.

Optionally, as shown in FIG. 2, the support component 13 includes a wall shared by the electrical chamber 11a and the collection chamber 11b. The support component 13 (or a part thereof) may be used directly as a wall shared by the electrical chamber 11a and the collection chamber 11b, so that the distance between the electrical chamber 11a and the collection chamber 11b can be minimized, saving space and improving the space utilization of the box 11.

It should be understood that the box 11 of the embodiment of the present invention may be implemented in various ways, and the embodiment of the present application is not limited thereto. For example, as shown in FIG. 2, the box 11 may include a box body 112 having an opening, and a top cover 111 that fits over the opening. The support component 13 is disposed in the box 11, and the support component 13 may be placed directly on a bottom wall 1121 of the box 112, or may be disposed at a distance from the bottom wall 1121. The support component 13 may divide the box 11 into two parts, one part for forming the electrical chamber 11a and the other part for forming the collection chamber 11b. In some embodiments, the support component 13 may directly serve as the bottom wall 1121 of the box 11.

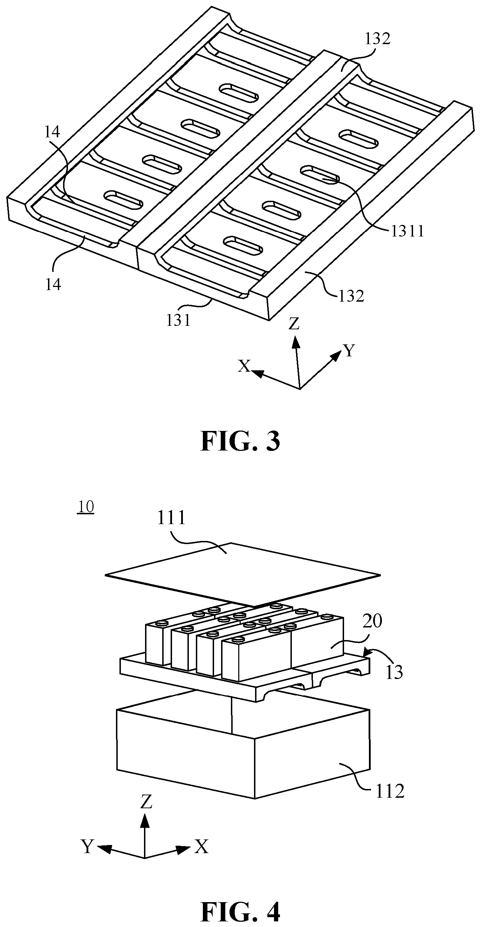

According to the invention, as shown in FIGS. 2 and 3, the support component 13 includes a first support wall 131 disposed opposite the first wall 21, and the reinforcing structure 14 is disposed on the surface of the first support wall 131 away from the first wall 21.

The reinforcing structure 14 is disposed on the surface of the first support wall 131 so that the first supply wall 131 provides greater support to support the battery cell 20. In addition, the reinforcing structure 14 is disposed on the surface of the first support wall 131 away from the first wall 21 so that the reinforcing structure 14 can avoid affecting connection between the first support wall 131 and the first wall 21.

According to the invention, with continued reference to FIGS. 2 and 3, the support component 13 further includes two side walls 132 connected to the first support wall 131, and the reinforcing structure 14 is disposed between the two side walls 132.

The two side walls 132 of the support component 13 may improve the overall impact resistance of the support component 13. Especially when the box 11 is subjected to mechanical extrusion or impact from the side, the two side walls 132 may provide sufficient structural strength to resist the extrusion and impact from the side, thereby avoiding vibration of the battery cell 20 inside the box 11 and ensuring the safety of the battery 10.

Optionally, the two side walls 132 may be hollow structures, which may reduce the weight of the support component 13. But the hollow structures will reduce the structural strength of the side walls 132, so reinforcing ribs may be provided in internal cavities of the side walls 132 to improve the structural strength of the side walls 132.

Optionally, the two side walls 132 of the support component 13 may be connected to the box 11. For example, when the support component 13 is disposed directly on the bottom wall 1121 of the box body 112, the two side walls 132 may be connected to the bottom wall 1121 of the box body 112 by, for example, bonding, welding, and riveting. For another example, when the support component 13 is disposed at a distance from the bottom wall 1121, the two side walls 132 may be connected to lateral walls of the box body 112 by, for example, bonding, welding, and riveting. The present invention does not limit this.

Optionally, in the embodiment of the present invention, the reinforcing structure 14 is connected to the two side walls 132 so that the overall structural strength of the support component 13 is further increased.

It should be understood that the reinforcing structure 14 in the embodiment of the present invention may be implemented in various ways, and the embodiment of the present invention is not limited thereto. For example, the reinforcing structure 14 may be connected to the surface of the first support wall 131 away from the first wall 21 of the battery cell, and disposed between the two side walls 132 without being connected to the two side walls 132. For example, the reinforcing structure 14 may be a reinforcing bar, which may be perpendicular to the two side walls 132; for another example, the reinforcing structure 14 may not be perpendicular to the two side walls 132. This is not limited in the present invention.

Optionally, as shown in FIGS. 3 and 4, the battery 10 includes a plurality of battery cells 20, the plurality of battery cells 20 are arranged in a first direction y, the support component 13 extends along the first direction y, and the support component 13 is provided with a plurality of reinforcing structures 14.

For example, the plurality of reinforcing structures 14 are spaced apart in the first direction y, and the reinforcing structures 14 extend along a second direction x (perpendicular to the first direction y); for another example, the plurality of reinforcing structures 14 are spaced apart along the second direction x, and the reinforcing structures 14 extend along the first direction y. The present invention does not limit this.

Optionally, in the embodiment of the present invention, as shown in FIGS. 2 and 3, the first support wall 131 and the two side walls 132 form an inverted "U" shaped structure. The inverted "U" shaped structure may increase the structural strength of the support component 13 as compared with a flat-plate structure while facilitating the connection between the first support wall 131 to the first wall 21.

It should be understood that when the support component 13 is an inverted "U" shaped structure, a closing component may be provided to close the opening of the inverted "U" shaped structure, so that the support component 13 and the closing component together form the collection chamber 11b. The closing component may be connected to the support component 13 by bonding, welding, riveting or other connection methods, and the present invention is not limited thereto.

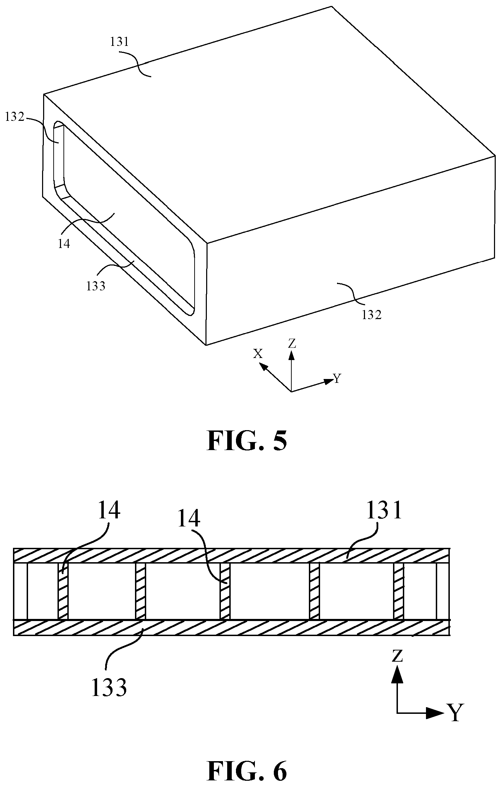

Optionally, in the embodiment of the present application, as shown in FIGS. 5 and 6, the support component 13 further includes a second support wall 133 disposed opposite the first support wall 131, and the first support wall 131, the second support wall 133 and the two side walls 132 form a "square" structure.

The support component 13 is provided with the second support wall 133 opposite to the first support wall 131, and the formed support component 13 that is of the "square" structure has a higher structural strength. The weight of the support component 13 is minimized while the structural strength is increased.

It should be understood that when the support component 13 is of a "square" structure, a cavity formed by the first support wall 131, the second support wall 133 and the two side walls 132 may be the collection chamber 11b. The first support wall 131, the second support wall 133 and the two side walls 132 may be molded together to form the collection chamber 11b by stamping, mold processing and other processing methods.

Optionally, in the embodiment of the present invention, with continued reference to FIGS. 5 and 6, the reinforcing structure 14 is connected to the first support wall 131 and/or the second support wall 133, further improving the overall structural strength of the support component 13.

Optionally, in the embodiment of the present invention, the support component 13 is integrally formed with the reinforcing structure 14, thereby saving machining time and improving machining efficiency. The integrally formed structure allows for a greater structural strength of the support component 13 The integrally formed structure of the support component 13 and the reinforcing structure 14 may be implemented by means of stamping, mold processing, and the like, and the present invention is not limited thereto.

It should be understood that the support component 13 and the reinforcing structure 14 may also be machined separately and then assembled, and the present invention is not limited thereto.

Optionally, in the embodiment of the present invention, as shown in FIGS. 2 and 3, the first support wall 131 is provided with a pressure relief region 1311, and the emissions of the battery cell 20 pass through the pressure relief region 1311 to be discharged out of the electrical chamber 11a when the pressure relief mechanism 213 is actuated.

The pressure relief region 1311 is disposed corresponding to the pressure relief mechanism 213. It should be understood that each pressure relief region 1311 disposed on the first support wall 131 may correspond to one or more pressure relief mechanisms 213. For example, the first support wall 131 is provided with a plurality of pressure relief regions 1311, and the plurality of pressure relief regions 1311 correspond to the pressure relief mechanisms 213 of the plurality of battery cells 20 one by one. For another example, the first support wall 131 is provided with one or more pressure relief regions 1311, each pressure relief region 1311 corresponding to a plurality of pressure relief mechanisms 213. Taking FIG. 3 as an example, the first support wall 131 is provided with a plurality of pressure relief regions 1311, and the plurality of pressure relief regions 1311 correspond to the pressure relief mechanisms 213 of the plurality of battery cells 20 one by one.

The emissions of the battery cells 20 may pass through the pressure relief regions 1311 to be discharged out of the electrical chamber 11a, thus avoiding that the emissions intensively enter the electrical chamber 11a to cause short circuits or thermal runaway between the battery cells 20 to affect the safety of the battery 10.

Optionally, in the embodiment of the present invention, as shown in FIG. 3, the pressure relief region 1311 is staggered with the reinforcing structure 14. A discharge path in which the emissions of the battery cell 20 pass through the pressure relief region 1311 to be discharged out of the electrical chamber 11a is blocked by the reinforcing structure 14, thereby ensuring that the emissions of the battery cell 20 are discharged out of the electrical chamber 11a smoothly, avoiding thermal runaway spread, and improving the safety of the battery 10.

Optionally, in the embodiment of the present invention, the pressure relief region 1311 is a weakened region of the first support wall 131, and the weakened region is to be disrupted when the pressure relief mechanism 213 is actuated. Particularly, when the pressure relief mechanism 213 is actuated, the weakened region can be disrupted so that the emissions of the battery cell 20 pass through the weakened region to be discharged out of the electrical chamber 11a. For example, the emissions may pass through the weakened region to enter the collection chamber 11b. The pressure relief region 1311 is constructed as the weakened region, so that when the pressure relief mechanism 213 is not actuated, for example, during normal use of the battery 10, the first support wall 131 is sealed, effectively protecting the pressure relief mechanism 213 and avoiding failure of the pressure relief mechanism 213 due to damage by an external force. Alternatively, when thermal runaway of the battery cell 20 occurs, the weakened region can be disrupted in time, for discharging the emissions to the outside of the electrical chamber 11a, thereby avoiding thermal runaway spread and improving the safety of the battery 10.

It should be understood that when the pressure relief region 1311 is the weakened region, the weakened region may be constructed in various ways that can be destroyed by the emissions easily, and the embodiment of the present invention is not limited thereto. Examples are given below. For example, the pressure relief region 1311 may be an area with a small thickness on the first support wall 131, so the pressure relief region 1311 has weak strength. In this way, the weakened region is formed. In addition to using the weakened region with a small thickness, a weakened region made of a low melting point material may also be used, which is easy to be melted by the emissions. That is, the weakened region may have a lower melting point than the rest part of the first support wall 131. For example, the weakened region is made of materials with a melting point less than 400°C.

It should be understood that when the pressure relief region 1311 is the weakened region, the weakened region may be made of materials with a low melting point or a small thickness, that is, the two embodiments described above may be implemented either separately or in combination, and the embodiment of the present invention is not limited thereto.

Optionally, in the embodiment of the present invention, the first support wall 131 is provided with a recess corresponding to the pressure relief mechanism 213, and the weakened region is provided on a bottom wall of the recess.

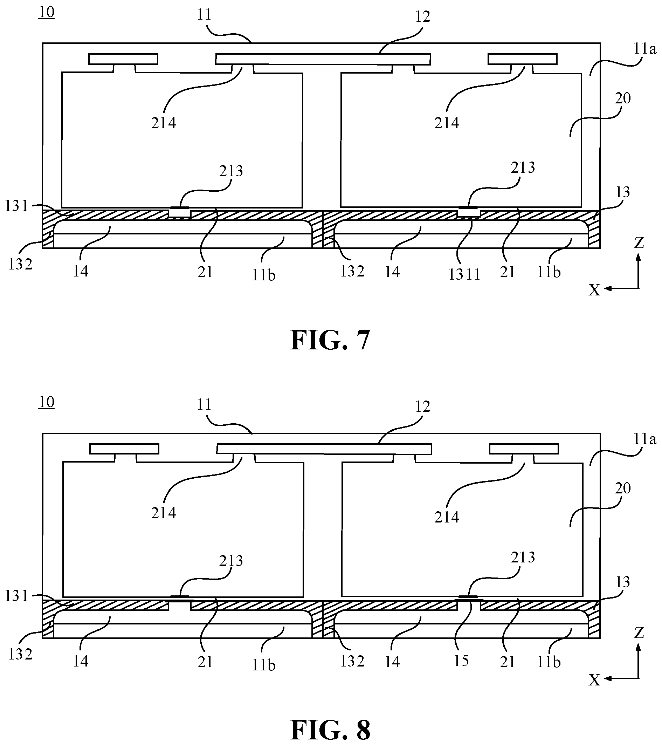

It should be understood that the recess in the embodiment of the present invention may be implemented in various ways, and the embodiment of the present invention is not limited thereto. For example, as shown in FIGS. 2 and 3, the opening of the recess faces the collection chamber 11b, the bottom wall of the recess is close to the first wall 21 of the battery cell 20, and the weakened region is provided on the bottom wall of the recess. For another example, as shown in FIG. 7, the opening of the recess faces the pressure relief mechanism 213, the bottom wall of the recess is away from the first wall 21 of the battery cell 20, the weakened region is provided on the bottom wall of the recess, and the interior of the recess provides a deformation space for the pressure relief mechanism 213.

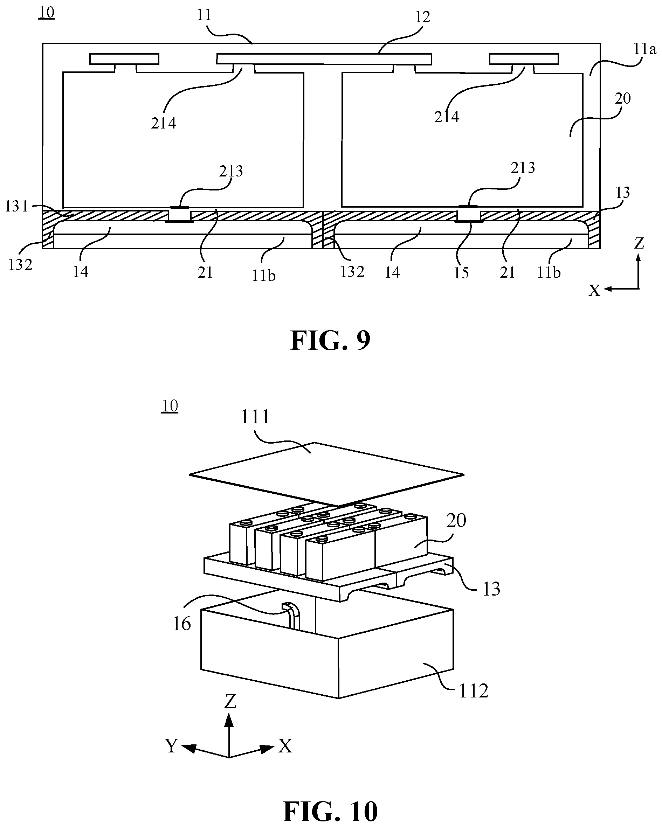

Optionally, in the embodiment of the present invention, the pressure relief region 1311 is a first through hole that penetrates the first support wall 131 along a thickness direction of the first support wall 131, for example, direction z in FIGS. 8 and 9.

In the case that the first through hole serves as the pressure relief region 1311, on the one hand, machining is facilitated, and on the other hand, the emissions discharged via the pressure relief mechanism 213 may be released quickly.

Optionally, as shown in FIGS. 8 and 9, the battery 10 further includes a sealing component 15, the sealing component 15 being used to seal the first through hole and to be disrupted when the pressure relief mechanism 213 is actuated.

The sealing component 15 is used to be disrupted when the pressure relief mechanism 213 is actuated, so that the emissions of the battery cell 20 pass through the weakened region to be discharged out of the electrical chamber 11a. The sealing component 15 may be a gasket, a sealant, a sealing membrane, etc., and the material of the sealing component 15 may be polyethylene, polypropylene, rubber, polyurethane, etc. In the case that the first through hole serves as the pressure relief region 1311, by reasonably setting the melting point of the sealing component 15 on the one hand, the sealing of the electrical chamber 11a may be maintained in the normal use of the battery cell 20 to protect the pressure relief mechanism 213 from being affected by the external environment; and on the other hand, when thermal runaway of the battery cell 20 occurs, the sealing component 15 can be disrupted in time to reveal the first through hole, and then the emissions of the battery cell 20 are discharged out of the electrical chamber 11a through the first through hole, thereby avoiding thermal runaway spread and improving the safety of the battery 10.

Optionally, the position of the sealing component 15 of the embodiment of the present invention may be set depending on actual application. For example, the sealing component 15 may be disposed in the first through hole, so as to seal the first through hole on the one hand, and on the other hand, the sealing component 15 is disposed in the first through hole without occupying other space in the box 11, thereby improving the space utilization of the box 11. For another example, as shown in FIG. 8, the sealing component 15 is disposed on a surface of the first support wall 131 facing the first wall 21, and/or the sealing component 15 is disposed on a surface of the first support wall 131 away from the first wall 21 to facilitate machining, as shown in FIG. 9. In addition, as shown in FIG. 8, the sealing component 15 is disposed on the surface of the first support wall 131 facing the first wall 21, the sealing component 15 is closer to the pressure relief mechanism 213 and can be quickly disrupted by the emissions from the pressure relief mechanism 213, thereby avoiding affecting the actuation of the pressure relief mechanism 213 while allowing the emissions to be discharged into the collection chamber 11b in time. As shown in FIG. 9, when the sealing component 15 is disposed on the surface of the first support wall 131 away from the first wall 21, the distance between the pressure relief mechanism 213 and the sealing component 15 can provide a deformation space for the actuation of the pressure relief mechanism 213, thereby avoiding affecting the normal actuation of the pressure relief mechanism 213.

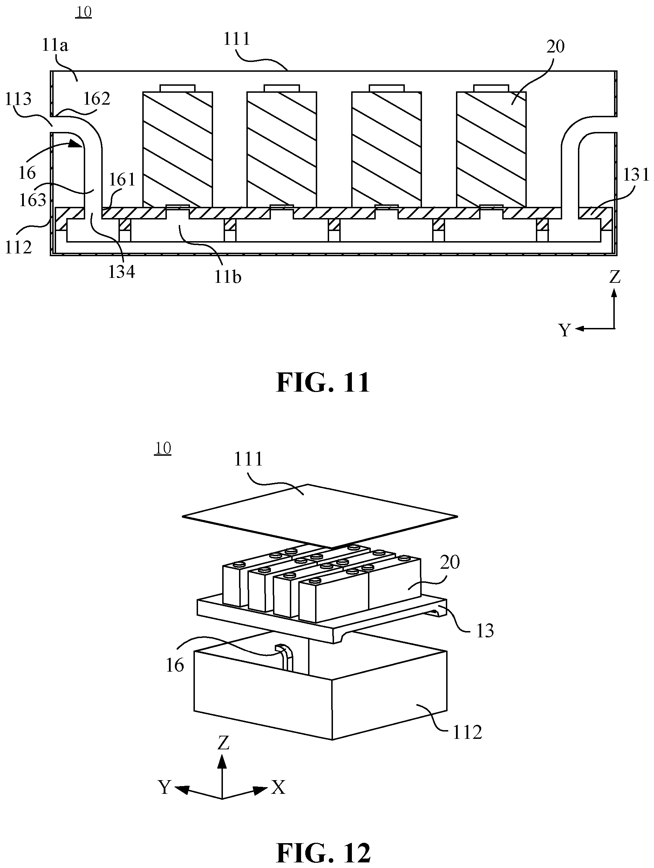

Optionally, in the embodiment of the present invention, as shown in FIGS. 10 and 11, the battery 10 further includes an exhaust component 16, and the emissions of the battery cell 20 in the collection chamber 11b may be discharged out of the box 11 in time via the exhaust component 16, avoiding thermal runaway spread of the battery 10.

Specifically, referring to FIG. 11, the exhaust component 16 may be, for example, an exhaust duct. The exhaust component 16 includes a cavity 163, a second through hole 134 may be provided in an area of the first support wall 131 that is not in contact with the first wall 21 of the battery cell 20, and a first end 161 of the exhaust component 16 is connected to the second through hole 134 on the first support wall 131; the box body 112 is provided with a third through hole 113, and a second end 162 of the exhaust component 16 is connected to the third through hole 113 on the box body 112. The emissions of the battery cell 20 in the collection chamber 11b first pass through the second through hole 134 to enter the cavity 163 to arrive at the third through hole 113, and is then discharged out of the box body 11 through the third through hole 113. Optionally, the first end 161 of the exhaust component 16 is hermetically connected to the second through hole 134, and the second end 162 of the exhaust component 16 is hermetically connected to the third through hole 113.

Optionally, in the embodiment of the present invention, a single exhaust component 16 may be provided to save the internal space of the battery 10, or a plurality of exhaust components 16 may be provided to increase the discharge rate of the emissions inside the battery 10.

It should be understood that in embodiment of the present invention, one support component 13 may be provided in the box 11, or a plurality of support components 13 may be provided. For example, as shown in FIGS. 2 to 11, one support component 13 corresponds to a battery cell group that include a plurality of battery cells 20 arranged along the first direction y, and the battery 10 includes a plurality of battery cell groups arranged along the second direction x. A plurality of support components 13 are disposed in the box 11 to correspond to the plurality of battery cell groups one by one. In this case, the battery 10 needs to be provided with a plurality of exhaust components 16 corresponding to the plurality of support components 13 one by one, or each of the plurality of support components 13 corresponds to two exhaust components 16, and the two exhaust components 16 are close to two ends of one support component 13 in the first direction y, respectively. As a further example, as shown in FIG. 12, one support component 13 is disposed in the box 11, corresponding to a plurality of battery cell groups. In this case, the battery 10 may be provided with one exhaust component 16 corresponding to one support component 13, or provided with two exhaust components 16 corresponding to one support component 13, and the two exhaust components 16 are close to two ends of the one support component 13 in the first direction y, respectively.

An embodiment of the present invention further provides an electrical device, and the electrical apparatus may include the battery 10 in any of the foregoing embodiments. Optionally, the electrical device may be a vehicle 1, a ship, or a spacecraft, but the embodiment of the present invention is not limit thereto.

The present invention is not limited to the specific embodiments disclosed herein, but rather includes all technical solutions falling within the scope of the claims.

## Claims

1. A battery (10), comprising:
a box (11) comprising an electrical chamber (11a);
a battery cell (20) accommodated in the electrical chamber (11a), a pressure relief mechanism (213) being disposed on a first wall (21) of the battery cell (20); and
a support component (13) attached to the first wall (21), the support component (13) being configured so that emissions of the battery cell (20) pass through the support component (13) to be discharged out of the electrical chamber (11a) when the pressure relief mechanism (213) is actuated, and the support component (13) being provided with a reinforcing structure (14);
wherein the support component (13) comprises a first support wall (131) disposed opposite the first wall (21), and the reinforcing structure (14) is disposed on a surface of the first support wall (131) away from the first wall (21); **characterized in that**
the support component (13) further comprises two side walls (132) connected to the first support wall (131), and the reinforcing structure (14) is disposed between the two side walls (132).

2. The battery (10) according to claim 1, wherein the reinforcing structure (14) is connected to the two side walls (132).

3. The battery (10) according to claim 1 or 2, wherein the first support wall (131) forms an inverted "U" shaped structure with the two side walls (132).

4. The battery (10) according to any one of claims 1-3, wherein the support component (13) further comprises a second support wall (133) disposed opposite the first support wall (131), and the first support wall (131), the second support wall (133), and the two side walls (132) form a "square" structure, preferably
wherein the reinforcing structure (14) is connected to the first support wall (131) and/or the second support wall (133).

5. The battery (10) according to any one of claims 1 to 4, wherein the first support wall (131) is provided with a pressure relief region (1311), and emissions of the battery cell (20) pass through the pressure relief region (1311) to be discharged out of the electrical chamber (11a) when the pressure relief mechanism (213) is actuated.

6. The battery (10) according to claim 5, wherein the pressure relief region (1311) is staggered with the reinforcing structure (14).

7. The battery (10) according to claim 5 or 6, wherein the pressure relief region (1311) is a weakened region of the first support wall (131), and the weakened region is to be disrupted when the pressure relief mechanism (213) is actuated, preferably
wherein the first support wall (131) is provided with a recess corresponding to the pressure relief mechanism (213), and the weakened region is provided on a bottom wall of the recess.

8. The battery (10) according to claim 5 or 6, wherein the pressure relief region (1311) is a first through hole that penetrates the first support wall (131) along a thickness direction of the first support wall (131).

9. The battery (10) according to claim 8, wherein the battery (10) further comprises a sealing component (15), the sealing component (15) being used to seal the first through hole and to be disrupted when the pressure relief mechanism (213) is actuated, preferably
wherein the sealing component is disposed in the first through hole to seal the first through hole, or
wherein the sealing component (15) is disposed on a surface of the first support wall (131) facing the first wall (21), and/or
the sealing component (15) is disposed on a surface of the first support wall (131) away from the first wall (21).

10. The battery (10) according to any one of claims 1 to 9, wherein the support component (13) is integrally formed with the reinforcing structure (14).

11. The battery (10) according to any one of claims 1 to 10, wherein the box (11) further comprises a collection chamber (11b) used for collecting the emissions of the battery cell 20 that pass through the support component (13) to be discharged when the pressure relief mechanism (213) is actuated.

12. The battery (10) according to claim 11, wherein the battery (10) further comprises an exhaust component (16), and the emissions of the battery cell (20) in the collection chamber (11b) are discharged out of the box (11) via the exhaust component (16), preferably
wherein the support component (13) is provided with a second through hole, the box (11) is provided with a third through hole, a first end of the exhaust component (16) is connected to the second through hole, and a second end of the exhaust component (16) is connected to the third through hole, and/or
wherein the exhaust component (16) comprises a cavity that communicates with the collection chamber (11b), and the emissions of the battery cell (20) in the collection chamber (11b) are discharged out of the box (11) through the cavity.

13. An electrical device, comprising the battery (10) according to any one of claims 1-12, the battery (10) being configured to provide electric energy.

## Patentansprüche

1. Eine Batterie (10), umfassend:
einen Kasten (11), der eine elektrische Kammer (11a) umfasst;
eine Batteriezelle (20), die in der elektrischen Kammer (11a) aufgenommen ist, wobei ein Druckentlastungsmechanismus (213) an einer ersten Wand (21) der Batteriezelle (20) angeordnet ist; und
eine Stützkonstruktion (13), die an der ersten Wand (21) befestigt ist, wobei die Stützkonstruktion (13) derart ausgebildet ist, dass Emissionen der Batteriezelle (20) beim Auslösen des Druckentlastungsmechanismus (213) durch die Stützkonstruktion (13) hindurch aus der elektrischen Kammer (11a) abgeführt werden, und wobei die Stützkonstruktion (13) mit einer Verstärkungsstruktur (14) versehen ist;
wobei die Stützkonstruktion (13) eine erste Stützwand (131) umfasst, die der ersten Wand (21) gegenüberliegt, und die Verstärkungsstruktur (14) auf einer von der ersten Wand (21) abgewandten Oberfläche der ersten Stützwand (131) angeordnet ist; **dadurch gekennzeichnet, dass**
die Stützkonstruktion (13) ferner zwei Seitenwände (132) umfasst, die mit der ersten Stützwand (131) verbunden sind, und die Verstärkungsstruktur (14) zwischen den zwei Seitenwänden (132) angeordnet ist.

2. Batterie (10) nach Anspruch 1, wobei die Verstärkungsstruktur (14) mit den zwei Seitenwänden (132) verbunden ist.

3. Batterie (10) nach Anspruch 1 oder 2, wobei die erste Stützwand (131) mit den zwei Seitenwänden (132) eine umgekehrt U-förmige Struktur bildet.

4. Batterie (10) nach einem der Ansprüche 1 bis 3, wobei die Stützkonstruktion (13) ferner eine zweite Stützwand (133) umfasst, die der ersten Stützwand (131) gegenüberliegt, und wobei die erste Stützwand (131), die zweite Stützwand (133) und die zwei Seitenwände (132) eine "quadratische" Struktur bilden, vorzugsweise
wobei die Verstärkungsstruktur (14) mit der ersten Stützwand (131) und/oder der zweiten Stützwand (133) verbunden ist.

5. Batterie (10) nach einem der Ansprüche 1 bis 4, wobei die erste Stützwand (131) mit einem Druckentlastungsbereich (1311) versehen ist und Emissionen der Batteriezelle (20) beim Auslösen des Druckentlastungsmechanismus (213) durch den Druckentlastungsbereich (1311) hindurch aus der elektrischen Kammer (11a) abgeführt werden.

6. Batterie (10) nach Anspruch 5, wobei der Druckentlastungsbereich (1311) gegenüber der Verstärkungsstruktur (14) versetzt angeordnet ist.

7. Batterie (10) nach Anspruch 5 oder 6, wobei der Druckentlastungsbereich (1311) ein geschwächter Bereich der ersten Stützwand (131) ist und der geschwächte Bereich beim Auslösen des Druckentlastungsmechanismus (213) zerstört werden soll; vorzugsweise
wobei die erste Stützwand (131) mit einer Ausnehmung versehen ist, die dem Druckentlastungsmechanismus (213) entspricht, und der geschwächte Bereich auf einer Bodenwand der Ausnehmung angeordnet ist.

8. Batterie (10) nach Anspruch 5 oder 6, wobei der Druckentlastungsbereich (1311) ein erstes Durchgangsloch ist, das die erste Stützwand (131) in einer Dickenrichtung der ersten Stützwand (131) durchdringt.

9. Batterie (10) nach Anspruch 8, wobei die Batterie (10) ferner eine Dichtungskomponente (15) umfasst, die dazu dient, das erste Durchgangsloch abzudichten und beim Auslösen des Druckentlastungsmechanismus (213) zerstört zu werden; vorzugsweise
wobei die Dichtungskomponente (15) in dem ersten Durchgangsloch angeordnet ist, um dieses abzudichten, oder
wobei die Dichtungskomponente (15) auf einer der ersten Wand (21) zugewandten Oberfläche der ersten Stützwand (131) und/oder auf einer der ersten Wand (21) abgewandten Oberfläche der ersten Stützwand (131) angeordnet ist.

10. Batterie (10) nach einem der Ansprüche 1 bis 9, wobei die Stützkonstruktion (13) einstückig mit der Verstärkungsstruktur (14) ausgebildet ist.

11. Batterie (10) nach einem der Ansprüche 1 bis 10, wobei der Kasten (11) ferner eine Sammelkammer (11b) umfasst, die dazu dient, die Emissionen der Batteriezelle (20), die beim Auslösen des Druckentlastungsmechanismus (213) durch die Stützkonstruktion (13) hindurch abgeführt werden, aufzunehmen.

12. Batterie (10) nach Anspruch 11, wobei die Batterie (10) ferner eine Abgaskomponente (16) umfasst und die Emissionen der Batteriezelle (20) in der Sammelkammer (11b) über die Abgaskomponente (16) aus dem Kasten (11) abgeführt werden; vorzugsweise
wobei die Stützkonstruktion (13) mit einem zweiten Durchgangsloch versehen ist, der Kasten (11) mit einem dritten Durchgangsloch versehen ist, ein erstes Ende der Abgaskomponente (16) mit dem zweiten Durchgangsloch verbunden ist und ein zweites Ende mit dem dritten Durchgangsloch verbunden ist, und/oder
wobei die Abgaskomponente (16) einen Hohlraum umfasst, der mit der Sammelkammer (11b) in Verbindung steht, und die Emissionen der Batteriezelle (20) aus dem Kasten (11) durch den Hohlraum abgeführt werden.

13. Elektrisches Gerät, umfassend die Batterie (10) nach einem der Ansprüche 1-12, wobei die Batterie (10) dazu ausgebildet ist, elektrische Energie bereitzustellen.

## Revendications

1. Une batterie (10), comprenant :
un boîtier (11) comprenant une chambre électrique (11a);
une cellule de batterie (20) logée dans la chambre électrique (11a), un mécanisme de décharge de pression (213) étant disposé sur une première paroi (21) de la cellule de batterie (20); et
un composant de support (13) fixé à la première paroi (21), le composant de support (13) étant configuré de sorte que les émissions de la cellule de batterie (20) traversent le composant de support (13) pour être évacuées hors de la chambre électrique (11a) lorsque le mécanisme de décharge de pression (213) est actionné, et le composant de support (13) étant pourvu d'une structure de renforcement (14);
le composant de support (13) comprenant une première paroi de support (131) disposée en regard de la première paroi (21), et la structure de renforcement (14) étant disposée sur une surface de la première paroi de support (131) éloignée de la première paroi (21); **caractérisé en ce que**
le composant de support (13) comprend en outre deux parois latérales (132) reliées à la première paroi de support (131), et la structure de renforcement (14) est disposée entre les deux parois latérales (132).

2. Batterie (10) selon la revendication 1, dans laquelle la structure de renforcement (14) est reliée aux deux parois latérales (132).

3. Batterie (10) selon la revendication 1 ou 2, dans laquelle la première paroi de support (131) forme, avec les deux parois latérales (132), une structure en « U inversé ».

4. Batterie (10) selon l'une quelconque des revendications 1 à 3, dans laquelle le composant de support (13) comprend en outre une deuxième paroi de support (133) disposée en regard de la première paroi de support (131), et la première paroi de support (131), la deuxième paroi de support (133) et les deux parois latérales (132) forment une structure « carrée » ; de préférence
dans laquelle la structure de renforcement (14) est reliée à la première paroi de support (131) et/ou à la deuxième paroi de support (133).

5. Batterie (10) selon l'une quelconque des revendications 1 à 4, dans laquelle la première paroi de support (131) est pourvue d'une zone de décharge de pression (1311), et les émissions de la cellule de batterie (20) traversent la zone de décharge de pression (1311) pour être évacuées hors de la chambre électrique (11a) lorsque le mécanisme de décharge de pression (213) est actionné.

6. Batterie (10) selon la revendication 5, dans laquelle la zone de décharge de pression (1311) est décalée par rapport à la structure de renforcement (14).

7. Batterie (10) selon la revendication 5 ou 6, dans laquelle la zone de décharge de pression (1311) est une zone affaiblie de la première paroi de support (131), et la zone affaiblie est destinée à être rompue lorsque le mécanisme de décharge de pression (213) est actionné ; de préférence
dans laquelle la première paroi de support (131) est pourvue d'un évidement correspondant au mécanisme de décharge de pression (213), et la zone affaiblie est disposée sur une paroi inférieure de l'évidement.

8. Batterie (10) selon la revendication 5 ou 6, dans laquelle la zone de décharge de pression (1311) est un premier trou traversant qui traverse la première paroi de support (131) selon une direction d'épaisseur de la première paroi de support (131).

9. Batterie (10) selon la revendication 8, dans laquelle la batterie (10) comprend en outre un composant d'étanchéité (15), le composant d'étanchéité (15) étant utilisé pour obturer le premier trou traversant et destiné à être rompu lorsque le mécanisme de décharge de pression (213) est actionné ; de préférence
dans laquelle le composant d'étanchéité (15) est disposé dans le premier trou traversant pour obturer celui-ci ; ou
dans laquelle le composant d'étanchéité (15) est disposé sur une surface de la première paroi de support (131) faisant face à la première paroi (21) et/ou
sur une surface de la première paroi de support (131) éloignée de la première paroi (21).

10. Batterie (10) selon l'une quelconque des revendications 1 à 9, dans laquelle le composant de support (13) est formé d'une seule pièce avec la structure de renforcement (14).

11. Batterie (10) selon l'une quelconque des revendications 1 à 10, dans laquelle le boîtier (11) comprend en outre une chambre de collecte (11b) destinée à collecter les émissions de la cellule de batterie (20) qui traversent le composant de support (13) lorsque le mécanisme de décharge de pression (213) est actionné.

12. Batterie (10) selon la revendication 11, dans laquelle la batterie (10) comprend en outre un composant d'évacuation (16), et les émissions de la cellule de batterie (20) dans la chambre de collecte (11b) sont évacuées hors du boîtier (11) via le composant d'évacuation (16) ; de préférence
dans laquelle le composant de support (13) est pourvu d'un second trou traversant, le boîtier (11) est pourvu d'un troisième trou traversant, une première extrémité du composant d'évacuation (16) est reliée au second trou traversant, et une deuxième extrémité est reliée au troisième trou traversant ; et/ou
dans laquelle le composant d'évacuation (16) comprend une cavité communiquant avec la chambre de collecte (11b), et les émissions de la cellule de batterie (20) dans la chambre de collecte (11b) sont évacuées hors du boîtier (11) par la cavité.

13. Dispositif électrique, comprenant la batterie (10) selon l'une quelconque des revendications 1-12, la batterie (10) étant configurée pour fournir de l'énergie électrique.
